# EUROPÄISCHE PATENTSCHRIFT

(11) **EP 3 344 664 B1**
(45) Veröffentlichungstag und Bekanntmachung des Hinweises auf die Patenterteilung: **25.09.2019**
(21) Anmeldenummer: 16758189.1
(22) Anmeldetag: 31.08.2016
(51) Int. Cl.: C08F 2/22, C08F 18/00, C08F 20/00, C08F 10/00, C08F 12/00, A01N 43/56, A01N 25/10, A01N 59/20

(54) **BIOZIDE MISCHUNGEN**
BIOCIDAL MIXTURES
COMPOSITIONS BIOCIDES

(30) Priorität: 02.09.2015 EP 15183408; 24.02.2016 EP 16157033
(43) Veröffentlichungstag der Anmeldung: 11.07.2018
(73) Patentinhaber: Lanxess Deutschland GmbH, 50569 Köln (DE)
(72) Erfinder: UHR, Hermann, 51373 Leverkusen (DE); JAETSCH, Thomas, 50933 Köln (DE)
(86) Internationale Anmeldenummer: PCT/EP2016/070521
(87) Internationale Veröffentlichungsnummer: WO 2017/037118

(56) Entgegenhaltungen:
- EP-A1- 2 443 927
- EP-A2- 0 514 644
- WO-A1-2012/055673

## Beschreibung

Die Erfindung betrifft biozide Mischungen enthaltend penflufenhaltige Polymerpartikel, Kupferverbindungen und spezielle Alkanolamine und deren Verwendung zum Schutz von Holz- und Holzprodukten, sowie Holzschutzmittel enthaltend biozide Mischungen und gegebenenfalls weitere Wirkstoffe.

Penflufen (N-(2-[1,3-Dimethylbuthylphenyl]-5-fluor-1,3-dimethyl-1H-pyrazol-4-carboxamid, CAS Nr. 494793-67-8) ist ein fungizider Wirkstoff aus der Klasse der Pyrazolylcarboxanilide der Formel (I) und aus der WO 20031010149 A1 bekannt.

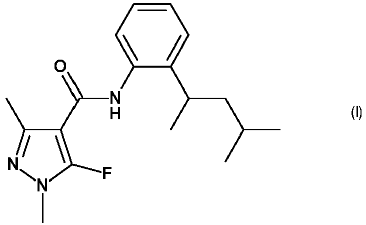

In Kombination mit weiteren fungiziden, bakteriziden, algiziden und insektiziden Wirkstoffen kann das Wirkspektrum verbreitert und den jeweiligen Anforderungen angepasst werden. Aus der WO 2012055673 A1 und der WO 2012055674 A1 ist bekannt, dass Penflufen insbesondere zur Bekämpfung von holzzerstörende Pilzen genutzt werden kann.

Kupferverbindungen werden aufgrund ihres Wirkspektrums und ihrer Wirtschaftlichkeit in vielfältiger Weise im industriellen Holzschutz eingesetzt. Es werden sowohl lösliche, wie auch unlösliche, aber auch, wie z.B. aus der US 2005/0118280 A1 bekannt, mikronisierte Kupferverbindungen eingesetzt. Gängig lösliche Kupferverbindungen, sind beispielsweise Cu-Amin Komplexe, wie Kupfermonoethanolaminkomplexe. Weiterhin werden Kupferverbindungen auch zusammen mit anderen Wirkstoffen eingesetzt, um das Wirkspektrum zu verbreitern. Aus der US 5635217 sind beispielsweise Holzschutzmittel aus Azolen, Kupferverbindungen und Alkanolaminen bekannt, die ein gutes Wirkspektrum liefern. Nachteilig an diesen bioziden Mischungen ist allerdings, dass weiterhin hohe Mengen an toxischen Azolen eingesetzt werden müssen.

Es bestand also weiterhin Bedarf nach einer Wirkstoffkombination, die einen hohen Schutz gegen holzzerstörende Pilze bietet und durch die die Nachteile des Stands der Technik überwunden werden können.

Überraschend wurde jetzt eine biozide Mischung enthaltend penflufenhaltige Polymerpartikel, Kupferverbindungen und spezielle Alkanolamine gefunden, die das Wirkspektrum ergänzt und wirksamer ist als im Falle der Verwendung von unverkapseltem Penflufen in Gegenwart von Kupferverbindungen und Alkanolaminen. Zudem kann sogar auf den zusätzlichen Einsatz von Azolen verzichtet werden.

Gegenstand der Erfindung ist daher eine biozide Mischung enthaltend penflufenhaltige Polymerpartikel, mindestens ein Alkanloamin ausgewählt aus der Gruppe Monoalkylmonoamine, Monoalkyldiamine, Dialkylamine und Trialkylamine, die mit einer, zwei oder drei Hydroxylgruppen substituiert sind und mindestens eine Kupferverbindung oder deren Kupfer-Alkanolaminkomplexe.

Als Kupferverbindungen in den erfindungsgemäßen bioziden Mischungen können wasserlösliche oder wasserunlösliche anorganische oder organische Kupferverbindungen oder Salze wie beispielsweise und vorzugsweise Kupfersulfat, Kupferacetat, Kupfercarbonat, Kupferhydroxid, Kupferborat, Kupferfluorid, Kupferhydroxidcarbonat, Kupferoxid und Kupferchlorid eingesetzt werden. Bevorzugt werden wasserlösliche, anorganische Kupfersalze eingesetzt. Besonders bevorzugt werden Kupferhydroxid und Kupferhydroxidcarbonat oder Gemische dieser Verbindungen eingesetzt.

Als Alkanolamine in den erfindungsgemäßen bioziden Mischungen werden Monoalkylmonoamine, Monoalkyldiamine, Dialkylamine und Trialkylamine, die mit einer, zwei oder drei Hydroxylgruppen substituiert sind, eingesetzt. Beispielsweise und vorzugsweise werden als Alkanolamine Isopropanolamin, 1,1-Diaminoethanol, 1,2-Diaminoethanol, Aminoethylethanolamin, Diethanolamin, Triethanolamin, Methylethanolamin und Monoethanolamin eingesetzt werden. Besonders bevorzugt werden C₁-C₈-Monoalkylmonoamine, C₁-C₈-Monoalkyldiamine und C₁-C₈-Dialkylamine, die mit einer oder zwei Hydroxylgruppen substituiert sind, eingesetzt. Ganz besonders bevorzugt wird Monoethanolamin eingesetzt.

Alkyl steht im Rahmen der Erfindung für einen unverzweigten oder verzweigten, linearen oder zyklischen Alkyl-Rest mit 1 bis 20 Kohlenstoffatomen. Bevorzugt steht Alkyl- für einen unverzweigten oder verzweigten, linearen oder zyklischen Alkyl-Rest mit 1 bis 14 Kohlenstoffatomen, ganz besonders bevorzugt mit 1 bis 8 Kohlenstoffatomen.

Beispielhaft und vorzugsweise steht Alkyl für Methyl, Ethyl, n-Propyl, Isopropyl, n-, i-, s- oder t-Butyl, Cyclopropyl, Cyclobutyl, Cyclopentyl, Cyclohexyl, Cycloheptyl, n-Pentyl, 1-Methylbutyl, 2-Methylbutyl, 3-Methylbutyl, neo-Pentyl, 1-Ethylpropyl, cyclo-Hexyl, cyclo-Pentyl, n-Hexyl, n-Heptyl, n-Octyl, n-Decyl und n-Dodecyl.

Die penflufenhaltigen Polymerpartikel können aus Polymerpartikeln hergestellt werden, die aus natürlichen, halbsynthetischen und synthetischen Materialien hergestellt wurden.

Im Rahmen der Erfindung können als naturliche Materialien fur die Polymerpartikel z.B. Gummi arabicum, Agar, Agarose, Maltodextrin, Natriumalginat, Calciumalginat, Dextran, Fette, Fettsauren, Cetylalkohol, Milchfeststoffe, Molassen, Gelatine, Gluten, Albumin, Schellack, Stärken, Caseinate, Stearine, Saccharose sowie Wachse, wie Bienenwachs, Carnaubawachs und Spermacetiwachs eingesetzt werden.

Als halbsynthetische Materialien fur die Polymerpartikel können beispielsweise Celluloseacetat, Celluloseacetatbutyrat, Celluloseacetatphthalat, Cellulosenitrat, Ethylcellulose, Hydroxypropylcellulose, Hydroxypropylmethylcellulose, Hydroxypropylmethylcellulosephthalat, Methylcellulose, Natriumcarboxymethylcellulose, hydrierter Talg, Myristylalcohol, Glycerin mono- oder -dipalmitat, hydriertes Rizinusöl, Glycerylmono- oder -tristearate und 12-Hydroxystearylalkohol eingesetzt werden.

Als synthetische Materialien für die Polymerpartikel können beispielsweise Aminoplastharze, wie Formaldehyd-Melamin-Harze, Formaldehyd-Harnstoff-Harze, Formaldehyd-Harnstoff-Melamin-Harze, Polyurethane, Epoxidharze, Styrolpolymere und -copolymere, Acrylpolymere und - copolymere, wie Polyacrylamid, Polyalkylcyanoacrylat, und Poly- (ethylenvinylacetat), Poly-(styrolacrylamid), Aluminiummonostearat, Carboxyvinylpolymere, Polyamide, Poly-(methylvinylether-maleinsaureanhydrid), Poly-(adipyl-L-lysin), Polycarbonate, Polyterephthalamid, Poly-(vinylacetatphthalat), Poly-(terephthaloyl-L-lysin), Polyarylsulfone, Poly-(methylmethacrylat), Poly-(ε-caprolacton), Polyvinylpyrrolidon, Polydimethylsiloxan, Polyoxyethylene, Polypropylene, Polyester, Polyglycolsäure, Polymilchsäure und deren Copolymere, Polyglutaminsäure, Polylysin, Polyimine und Polyvinylalkohol oder Mischungen oder Copolymere hieraus eingesetzt werden.

Fur die Herstellung der natürlichen, halbsynthetischen oder synthetischen Polymerpartikel sind zahlreiche Verfahren bekannt (siehe beispielsweise C.A. Finch, R. Bodmeier, Microencapsulation, Ullmann's Encyclopedia of Industrial Chemistry, 6. Auflage 2001, Elektronic Release; D.Crespy, K. Landfester, Beilstein J. of Org. Chem. 2010, 6, 1132-1148). Die penflufenhaltigen Polymerpartikel können dadurch hergestellt werden, dass das Penflufen bereits vor der Polymerisation mit den Monomeren in Kontakt gebracht wird, um dann polymerisiert zu werden. Sie können aber auch dadurch hergestellt werden, dass das Penflufen in das bereits vorliegende Polymer einarbeitet wird. Dieses erfolgt entweder durch Extrusion oder durch Emulgieren einer Lösung des Polymers und Penflufen und Entfernen des Lösungsmittels (Emulsions-Verdampfungs-Methode). In einer weiteren Ausführungsform kann das Penflufen auch mit den fertigen Polymerpartikel in Kontakt gebracht werden, um das Penflufen adsorptiv zu binden. Im penflufenhaltigen Polymerpartikel kann das Penflufen von einer Polymerschicht umschlossen sein (klassische Form der Verkapselung) oder auch gleichmäßig im Polymer (Polymermatrix) verteilt sein. Penflufen kann dort ungelöst, kristallin oder amorph, feindispers vorliegen oder gelöst im Polymer vorliegen. Bei den Lösungen im Polymer spricht man in der Literatur häufig auch von "erstarrten Lösungen", "erstarrten Schmelzen" oder "Polymermatrix". Insgesamt sind auch Zwischenformen mit umfasst und auch relativ wahrscheinlich, wie beispielsweise Kapseln, bei denen das Penflufen im Kern von dem Polymer umschlossen ist und sich aber zusätzlich noch Penflufen in der Kapselschale befindet, aber auch Formen bei denen beispielsweise ein Teil des Penflufen im Polymer gelöst ist und ein anderer Teil in ungelöster Form fein verteilt im Polymer vorliegt.

Penflufen kann sowohl als Racemat, in enantiomerenreiner Form oder als angereichertes Enantiomerengemisch eingesetzt werden. Auch eine Verwendung als Salz oder Säureadditionsverbindung ist möglich, wobei unter Salzen insbesondere Natrium-, Kalium-, Magnesium-, Calcium-, Zink-, Aluminium-, Eisen- und Kupfer-Salze verstanden wird und unter Säureadditionsverbindungen insbesondere Addukte mit Halogenwasserstoffsäuren, z.B. Chlorwasserstoff und Bromwasserstoff, Carbonsäuren, wie z.B. Ameisensäure, Essigsäure, Weinsäure und Oxalsäure, Sulfonsäuren, wie z.B. p-Toluolsulfonsäure sowie Schwefelsäure, Phosphorsäure und Salpetersäure verstanden wird. Bevorzugt wird Penflufen eingesetzt.

Bevorzugt besteht das Polymer der penflufenhaltigen Polymerpartikel aus Styrolpolymeren und - copolymeren, sowie Acrylpolymeren und -copolymeren. Besonders bevorzugt handelt es sich hierbei um Polyalkylacrylate, Polyalkylmethacrylate und Copolymerisate aus C₁-C₁₈-Alkylacrylaten und C₁-C₁₈-Alkylmethacrylaten.

Im Allgemeinen enthält das penflufenhaltigen Polymerpartikel 0,1 Gew. % bis 30 Gew.% , bevorzugt 0,2 Gew.% bis 20 Gew.% und ganz besonders bevorzugt 0,5 Gew.% bis 15 Gew.% Penflufen bezogen auf die Gesamtmenge an penflufenhaltigen Polymerpartikel. Bevorzugt werden die Polymerpartikel aus Polymeren auf Basis von ethylenisch ungesättigten Monomeren hergestellt.

Die ethylenisch ungesättigten Monomeren können entweder als Reinstoffe oder als Mischungen aus mehreren ethylenisch ungesättigten Monomeren bestehen.

Bevorzugt handelt es sich um neutrale, ungeladene, ethylenisch ungesättigten Monomere, die die Bezeichnung M1 erhalten.

Geeignete Monomere M1 umfassen bevorzugt vinylaromatische Monomere wie Styrol, Divinylbenzol, Ester monoethylenisch ungesättigter Mono- und Dicarbonsäuren mit 3 bis 8 und insbesondere 3 oder 4 C-Atomen, mit C₁-C₂₀-Alkanolen oder mit C₅-C₈-Cycloalkanolen, insbesondere die Ester der Acrylsäure, der Methacrylsäure, der Crotonsäure, die Diester der Maleinsäure, der Fumarsäure und der Itaconsäure und besonders bevorzugt die Ester der Acrylsäure mit C₁-C₁₈-Alkanolen (= C₁-C₁₈-Alkylacrylate) wie Methylacrylat, Ethylacrylat, n-Butylacrylat, Isobutylacrylat, tert.-Butylacrylat, n-Hexylacrylat, 2-Ethylhexylacrylat, 3-Propylheptylacrylat und Stearylacrylat sowie die Ester der Methacrylsäure mit C₁-C₁₈-Alkanolen, wie Methylmethacrylat, Ethylmethacrylat, n-Butylmethacrylat, Isobutylmethacrylat, tert.-Butylmethacrylat, n-Hexylmethacrylat und Stearylmethacrylat. Geeignete Monomere M1 sind außerdem Vinyl- und Allylester aliphatischer Carbonsäuren mit 1 bis 20 C-Atomen, beispielsweise Vinylacetat, Vinylpropionat sowie die Vinylester der Versatic®-Säuren (Vinylversatate), Vinylhalogenide wie Vinylchlorid und Vinylidenchlorid, konjugierte Diolefine wie Butadien und Isopren, sowie C₂-C₆-Olefine, wie Ethylen, Propen, 1-Buten und n-Hexen. Bevorzugte Monomere sind vinylaromatische Monomere, insbesondere Styrol, Divinylbenzol, C₁-C₂₀-Alkylacrylate, insbesondere C₁-C₁₈-Alkylacrylate und C₁-C₁₈-Alkylmethacrylate oder Gemische aus diesen Monomeren.

Des Weiteren eignen sich als Monomere M1 auch Amide der vorgenannten ethylenisch ungesättigten Carbonsäuren, insbesondere Acrylamid und Methacrylamid, ethylenisch ungesättigte Nitrile wie Methacrylnitril und Acrylnitril, Hydroxyalkylester der vorgenannten α,β-ethylenisch ungesättigten C₃-C₈-Monocarbonsäuren und der C₄-C₈-Dicarbonsäuren insbesondere Hydroxyethylacrylat, Hydroxyethylmethacrylat, 2- und 3-Hydroxypropyl-acrylat, 2- und 3-Hydroxypropylmethacrylat, Ester der vorstehend genannten monoethylenisch ungesättigten Mono- und Dicarbonsäuren mit C₂-C₄-Polyalkylenglykolen, insbesondere die Ester dieser Carbonsäuren mit Polyethylenglykol oder Alkyl-Polyethylenglykolen, wobei der (Alkyl)polyethylenglykol-Rest üblicherweise ein Molekulargewicht im Bereich von 100 bis 3000 g/mol aufweist.

Weitere Monomere M1 sind N-Vinylamide wie N-Vinylformamid, N-Vinylpyrrolidon, N-Vinylimidazol und N-Vinylcaprolactam.

Bevorzugt baut sich das Polymer aus mindestens 60 Gew. % Monomeren M1 auf, bezogen auf die Gesamtmenge der eingesetzten Monomeren auf. Besonders bevorzugt besteht der Anteil an Monomeren M1 mindestens 70 Gew. %, ganz besonders bevorzugt mindestens 80 Gew. %.

Zusätzlich zu den Monomeren M1 können gegebenenfalls auch ethylenisch, ungesättigte Monomere mit anionischen oder kationischen Gruppen, also geladene, ethylenisch, ungesättigte Monomere mit einpolymerisiert werden. Die ethylenisch, ungesättigten Monomeren mit anionischen oder kationischen Gruppen erhalten die Bezeichnung M2.

Zu den Monomeren M2 zählen insbesondere monoethylenisch ungesättigte Monomere, die wenigstens eine anionische Gruppe aufweisen, insbesondere Monomere, die wenigstens eine Säuregruppe, vorzugsweise wenigstens eine Sulfonsäuregruppe, eine Phosphonsäuregruppe oder ein oder zwei Carbonsäuregruppen aufweisen, sowie die Salze der Monomeren insbesondere die Alkalimetallsalze, z. B. die Natrium- oder Kaliumsalze sowie die Ammoniumsalze. Des Weiteren ethylenisch ungesättigte Sulfonsäuren insbesondere Vinylsulfonsäure, 2-Acrylamido-2-methylpropansulfonsäure, 2-Acryloxyethansulfonsäure und 2-Methacryloxyethansulfonsäure, 3-Acryloxy- und 3-Methacryloxypropansulfonsäure, Vinylbenzolsulfonsäure und deren Salze, ethylenisch ungesättigte Phosphonsäuren wie Vinylphosphonsäure und Vinylphosphonsäuredimethylester und deren Salze und α,β-ethylenisch ungesättigte C₃-C₈-Mono- und C₄-C₈-Dicarbonsäuren insbesondere Acrylsäure, Methacrylsäure, Crotonsäure, Maleinsäure, Fumarsäure und Itaconsäure. Bevorzugt werden als Monomere M2 α,β-ethylenisch ungesättigte C₃-C₈-Mono- und C₄-C₈-Dicarbonsäuren eingesetzt.

Zu den Monomeren M2 können weiterhin insbesondere monoethylenisch ungesättigte Monomere zählen, die wenigstens eine kationische Gruppe und/oder wenigstens eine im wässrigen protonierbare Gruppe aufweisen. Zu den kationischen Monomeren M2 zählen insbesondere solche, die eine protonierbare Aminogruppe, eine quaternäre Ammoniumgruppe, eine protonierbare Iminogruppe oder eine quaternisierte Iminogruppe aufweisen. Beispiele für Monomere M2 mit einer protonierbaren Iminogruppe sind N-Vinylimidazol und Vinylpyridine. Beispiele für Monomere M2 mit einer quaternisierten Iminogruppe sind N-Alkylvinylpyridiniumsalze und N-Alkyl-N'-vinylimidazoliniumsalze wie N-Methyl-N'-vinylimidazoliniumchlorid oder Methosulfat.

Beispiele für Monomere M2 mit protonierbaren Aminogruppen sind beispielsweise und vorzugsweise 2-(N,N-Dimethylamino)ethylacrylat, 2-(N,N-Dimethylamino)ethyl-methacrylat, 2-(N,N-Dimethylamino)ethylacrylamid, 3-(N,N-Dimethylamino)propyl-acrylamid, 3-(N,N-Dimethylamino)propylmethacrylamid, 2-(N,N-Dimethylamino)ethylmethacrylamid, sie können beispielsweise vorliegen als Cl⁻, HSO₄⁻, 1/2 SO₄²⁻ oder CH₃OSO₃⁻-Salze. Monomere mit quartären Ammoniumverbindungen sind beispielsweise und vorzugsweise 2-(N,N,N-Trimethylammonium)ethylacrylat-Chlorid, 2-(N,N,N-Tri-methylammonium)ethylmethacrylat-Chlorid, 2-(N,N,N-Trimethylammonium)-ethylmethacrylamid-Chlorid, 3-(N,N,N-Trimethylammonium)propylacrylamid-Chlorid, 3-(N,N,N-Trimethylammonium) propylmethacrylamid-Chlorid, 2-(N,N,N-Trimethylammonium)-ethylacrylamid-Chlorid, sowie die entsprechenden Methosulfate und Sulfate.

Der Anteil der Monomere M2 ist vorzugsweise nicht größer als 35 Gew.-%, besonders bevorzugt nicht größer als 20 Gew.-%, bezogen auf die Gesamtmenge der eingesetzten Monomeren. Ganz besonders bevorzugt wird 80 Gew. % bis 99.9 Gew. % Monomere M1 und 0,1 Gew.% bis 20 Gew. % Monomere M2, bezogen auf die Gesamtmenge der eingesetzten Monomeren, eingesetzt.

In einer weiteren bevorzugten Ausführungsform ist die Menge an geladenen Monomeren M2 im Polymer kleiner als 0,01 Gew. % bezogen auf die Gesamtmenge an eingesetzten Monomeren. Die Monomeren sind oben beschrieben und können einzeln oder in Mischung eingesetzt werden.

Die für die Emulsionspolymerisation geeigneten Starter sind die für eine Emulsionspolymerisation geeigneten und üblicherweise verwendeten Polymerisationsinitiatoren, die eine radikalische Polymerisation der Monomere M auslösen. Hierzu zählen öllösliche Azoverbindungen, wie 2,2'-Azobis-isobutyronitril, 2,2'-Azobis(2-methyl-butyronitril), 2,2'-Azobis[2-methyl-N-(-2-hydroxyethyl)propionamid, 1,1'-Azobis(1-cyclohexancarbonitril), 2,2'-Azobis(2,4-dimethylvaleronitril),2,2' -Azobis(N,N' -dimethylenisobutyroamidin)dihydrochlorid, und 2,2'-Azobis(2-amidinopropan)dihydrochlorid, organische oder anorganische Peroxide wie Diacetylperoxid, Di-tert.-butylperoxid, Diamylperoxid, Dioctanoylperoxid, Didecanoylperoxid, Dilauroylperoxid, Dibenzoylperoxid, Bis(o-toluyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperneodecanoat, tert.-Butylperben-zoat, tert.-Butylperoxid, tert.-Butylhydroperoxid, Cumolhydroperoxid, tert.-Butylperoxi-2-ethylhexanoat und Diisopropylperoxidicarbamat. Es können aber ebenfalls wasserlösliche radikalische Initiatoren, wie z.B. Salze der Peroxodischwefelsäure und Redox-Initiatorsysteme oder kationische Azoverbindungen, wie z.B. Azobis(dimethylamidinpropan) eingesetzt werden. Als wasserlösliche Initiatoren können die Salze der Peroxodischwefelsäure, insbesondere ein Natrium-, Kalium- oder Ammoniumsalze oder ein Redoxinitiatorsystem, das als Oxidationsmittel ein Salz der Peroxodischwefelsäure, Wasserstoffperoxid oder ein organisches Peroxid wie tert.-Butylhydroperoxid eingesetzt werden. Als Reduktionsmittel enthalten sie vorzugsweise eine Schwefelverbindung, die insbesondere ausgewählt ist unter Natriumhydrogensulfit, Natriumhydroxymethansulfinat und dem Hydrogensulfit-Addukt an Aceton. Weitere geeignete Reduktionsmittel sind phosphorhaltige Verbindungen wie phosphorige Säure, Hypophosphite und Phosphinate, sowie Hydrazin bzw. Hydrazinhydrat und Ascorbinsäure. Weiterhin können Redoxinitiatorsysteme einen Zusatz geringer Mengen von Redoxmetallsalzen wie Eisensalze, Vanadiumsalze, Kupfersalze, Chromsalze oder Mangansalze enthalten wie beispielsweise das Redoxinitiatorsystem Ascorbinsäure/Eisen(II)sulfat/Natriumperoxodisulfat.

Bevorzugt werden öllösliche radikalische Initiatoren eingesetzt. Ganz besonders bevorzugt handelt es sich bei den radikalischen Initiatoren um 2,2'-Azobis-isobutyronitril, 2,2'-Azobis(2-methylbutyronitril) oder Gemische dieser Initiatoren.

Zudem können gegebenenfalls weitere Hilfsstoffe wie z.B. Costabilisatoren, oberflächenaktive Substanzen, wie z.B. Schutzkolloide und niedermolekulare Emulgatoren, Lösungsmittel und Weichmacher eingesetzt werden. Falls Hilfsstoffe eingesetzt werden, sind dies bevorzugt Costabilisatoren, Emulgatoren und Lösungsmittel.

Die gegebenenfalls eingesetzten Costabilisatoren sind Stoffe, die die Mikroemulsion gegen Ostwaldreifung stabilisieren und eine sehr geringe Löslichkeit in der kontinuierlichen Phase aufweisen. Bevorzugt handelt es sich um langkettige, lineare, cyklische oder verzweigte, aliphatische Kohlenwasserstoffe ausgewählt aus der Gruppe C₁₄-C₂₅-Alkane und C₁₄-C₂₅-Cycloalkane. Besonders bevorzugt handelt es sich um C₁₄-C₁₈-Alkane und C₁₄-C₁₈-Cycloalkane, wie ganz besonders bevorzugt um Tetradecan, Pentadecan, Hexadecan, Heptadecan, Octadecan und Nonadecan oder Gemische aus diesen Costabilisatoren.

Wenn Costabilisatoren eingesetzt werden, dann liegt die Menge im Allgemeinen zwischen 0,05 bis 20 Gew.%, bevorzugt zwischen 0,1 bis 15 Gew.% und ganz besonders bevorzugt zwischen 0,2 und 10 Gew. % bezogen auf die Gesamtmenge der eingesetzten Monomeren.

Als Lösungsmittel und Weichmacher können im Allgemeinen alle Stoffe eingesetzt werden, die sich gegenüber den Monomeren, dem entstandenen Polymeren und dem Penflufen inert verhalten.

Als bevorzugte Lösungsmittel werden inerte, dipolare, aprotische, organische Lösungsmittel, wie insbesondere Ester zweiwertiger Carbonsäuren, beispielsweise und vorzugsweise Mischungen enthaltend Diisobutyladipat, Diisobutylglutarat, Diisobutylsuccinat (z.B. Rhodiasolv DIB), wie auch Benzylalkohol, Polyethylenglycole, Polypropylenglycole, eingesetzt.

Als Weichmacher werden bevorzugt Phthalate, wie insbesondere Diethylhexylphthalat (DEHP), Dibutylphthalat (BBP), Diisononylphthalat (DINP), Diisodecylphthalat (DIDP), Diisooctylphthalat (DNOP), Diisobutylphthalat (DIBP), Diisohexylphthalat, Diisoheptylphthalat, Di-n-octylphthalat, Diisoundecylphthalat, Diisotredecylphthalate; Adipate, wie insbesondere Diethylhexyladipat (DEHA), Diisooctyladipat, Diisononyladipat, Polyester der Adipinsäure oder Glutarsäure, wie insbesondere Ultramoll IV® der Lanxess Deutschland GmbH; Trialkylester der Zitronensäure oder acetylierte Trialkylester der Zitronensäure, wie insbesondere Acetyltributylcitrat (ATBC); Ester der Trimellitsäure, wie insbesondere Tri(2-ethylhexyl)trimellitat, Tri(isooctyl)trimellitat, Triisononyl)trimellitat; 1,2-Dicyclohexylbasierte Weichmacher, wie insbesondere 1,2-Cyclohexandicarbon-säurenonylester (Hexamoll®, DINCH); Alkylsulfonsäureester des Phenols, wie insbesondere Mesamoll® der Lanxess Deutschland GmbH (CAS-Nr 091082-17-6); Acetylierte Mono- und Diglyceride; Benzoesäurediester, wie insbesondere Dialkylen-glycolen, wie insbesondere Dipropylenglycoldibenzoat oder Isononylbenzoat; Trimethylolpropanester wie insbesondere Trimethylolpropan-benzoat-2-ethylhexanoat-Gemische; Dialkylester der Terephthalsäure, wie insbesondere Di-2-ethylhexyl-terephthalat, eingesetzt.

Als oberflächenaktive Substanzen zählen sowohl Schutzkolloide als auch niedermolekulare Emulgatoren, wobei letztere im Unterschied zu den Schutzkolloiden vorzugsweise ein Molekulargewicht unterhalb von 2000 g/mol, insbesondere unterhalb 1000 g/mol (Massenmittel) aufweisen. Die Schutzkolloide und niedermolekularen Emulgatoren können sowohl kationischer, anionischer, neutraler als auch zwitterionischer Natur sein.

Beispiele für anionische oberflächenaktive Substanzen sind anionische niedermolekulare Emulgatoren wie beispielsweise und vorzugsweise Alkylphenylsulfonate, Phenylsulfonate, Alkylsulfate, Alkylsulfonate, Alkylethersulfate, Alkylphenolethersulfate, Alkylpolyglykoletherphosphate, Alkyldiphenylethersulfonate, Polyarylphenyletherphosphate, Alkylsulfosuccinate, Olefinsulfonate, Paraffinsulfonate, Petroleumsulfonate, Tauride, Sarkoside, Fettsäuren, Alkylnaphthalinsulfonsäuren, Naphthalinsulfonsäuren, einschliesslich ihrer Alkali-, Erdalkali-, Ammonium- und Amin-Salze.

Anionische Schutzkolloide sind beispielsweise und vorzugsweise Ligninsulfonsäuren, Kondensationsprodukte sulfonierter Naphthaline mit Formaldehyd oder mit Formaldehyd und Phenol und gegebenenfalls Harnstoff sowie Kondensationsprodukte aus Phenol-sulfonsäure, Formaldehyd und Harnstoff, Lignin-Sulfit-Ablauge und Ligninsulfonate sowie Polycarboxylate wie Polyacrylate, Maleinsäureanhydrid/Olefin-Copolymere sowie die Alkali-, Erdalkali-, Ammonium- und Amin-Salze der vorgenannten Schutzkolloide. Nichtionische Schutzkolloide sind beispielsweise und vorzugsweise Polyethylenglykol, Polypropylenglykol, Polyethylenglykolpolypropylenglykol-Blockcopolymere, Polyethylen-glykolalkylether, Polypropylenglykolalkylether, Polyethylenglykolpolypropylen-glykolether-Blockcopolymere und deren Gemische.

Weitere, höhermolekulare Schutzkolloide, sind beispielsweise und vorzugsweise Carboxymethylcellulose, natürliche und synthetische pulvrige, körnige oder latexförmige Polymere, wie Gummi Arabicum, Polyvinylalkohol, Polyvinylacetat, sowie natürliche Phospholipide, wie Kephaline und Lecithine und synthetische Phospholipid sowie Paraffinöle.

Nichtionische niedermolekulare Emulgatoren sind beispielsweise und vorzugsweise Alkylphenolalkoxylate, Alkoholalkoxylate, Fettaminalkoxylate, Polyoxyeethylenglycerolfettsäureester, Rizinusölalkoxylate, Fettsäurealkoxylate, Fettsäureamidalkoxylate, Fettsäurepolydiethanolamide, Lanolinethoxylate, Fettsäurepolyglykolester, Isotridecyl-alkohol, Fettsäureamide, Methylcellulose, Fettsäureester, Silicon-Öle, Alkylpolyglykoside und Glycerolfettsäureester.

Kationische niedermolekulare Emulgatoren sind beispielsweise und vorzugsweise quartäre Ammoniumsalze, z. B. Trimethyl- und Triethyl-C₆-C₃₀-alkylammoniumsalze, wie Cocotrimethylammoniumsalze, Trimethylcetylammoniumsalze, Dimethyl- und Diethyl-di-C₄-C₂₀-alkylammoniumsalze, wie Didecyldimethylammoniumsalze und Dicocodimethylammoniumsalze, Methyl- und Ethyl-tri-C₄-C₂₀-alkylammoniumsalze, wie Methyltrioctylammoniumsalze, C₁-C₂₀-Alkyl-di-C₁-C₄-alkylbenzylammoniumsalze, wie Triethylbenzylammoniumsalze und Cocobenzyldimethylammoniumsalze, Hexadecyltrimethyl-ammoniumsalze, Methyl- und Ethyl-di-C₄-C₂₀-alkylpoly(oxyethyl)ammoniumsalze, z. B. Didecylmethylpoly(oxyethyl)ammoniumsalze, N-C₆-C₂₀-Alkylpyridiniumsalze, z. B. N-Laurylpyridiniumsalze, N-Methyl- und N-Ethyl-N-C₆-C₂₀-alkylmorpholiniumsalze, sowie N-Methyl- und N-Ethyl-N'-C₆-C₂₀-alkylimidazoliniumsalze, insbesondere die Halogenide, Borate, Carbonate, Formiate, Acetate, Propionate, Hydrogencarbonate, Sulfate und Methosulfate.

Zwitterionische niedermolekulare Emulgatoren sind solche mit betainischen Strukturen. Derartige Substanzen sind dem Fachmann bekannt und können einschlägigem Stand der Technik entnommen werden (siehe beispielsweise R.Heusch, in Ullmanns Encyclopedia of Industrial Chemistry, 5th. Ed. On CD-ROM, Wiley-VCH 1997, "Emulsions", Kapitel 7, Tabelle 4).

Die Menge an niedermolekularem Emulgator liegt üblicherweise im Bereich von 0,1 Gew. % bis 15 Gew. %, insbesondere im Bereich von 0,2 Gew. % bis 12 Gew. % und besonders bevorzugt 0,7 Gew. % bis 10 Gew. % bezogen auf die Gesamtmenge der eingesetzten Monomeren.

Zur Erhöhung der Wirksamkeit, aber auch zur Konservierung der entstandenen Suspensionen, können die penflufenhaltigen Polymerpartikel gegebenenfalls weitere antimikrobiell wirksame Verbindungen, Fungizide, Bakterizide, Herbizide, Insektizide oder andere Wirkstoffe enthalten. Diese Mischungen können ein noch breiteres Wirkungsspektrum besitzen. Diese Verbindungen können, wie das Penflufen, in den Monomeren gelöst werden oder dispergiert eingesetzt werden. In vielen Fällen erhält man dabei synergistische Effekte, d.h. die Wirksamkeit der Mischung ist größer als die Wirksamkeit der Einzelkomponenten. Besonders günstige Mischungspartner bzw. Biozide sind z.B. die folgenden Verbindungen:
Triazole wie:
   Azaconazol, Azocyclotin, Bitertanol, Bromuconazol, Cyproconazol, Diclobutrazol, Difenoconazol, Diniconazol, Epoxyconazol, Etaconazol, Fenbuconazol, Fenchlorazol, Fenethanil, Fluquinconazol, Flusilazol, Flutriafol, Furconazol, Hexaconazol, Imibenconazol, Ipconazol, Isozofos, Myclobutanil, Metconazol, Paclobutrazol, Penconazol, Propioconazol, Prothioconazol, Simeoconazol, (+)-cis-1-(4-chlorphenyl)-2-(1H-1,2,4-triazol-1-yl)-cycloheptanol, 2-(1-tert-Butyl)-1-(2-chlorphenyl)-3-(1,2,4-triazol-1-yl)-propan-2-ol, Tebuconazol, Tetraconazol, Triadimefon, Triadimenol, Triapenthenol, Triflumizol, Triticonazol, Uniconazol sowie deren Metallsalze und Säureaddukte;
Imidazole wie:
   Clotrimazol, Bifonazol, Climbazol, Econazol, Fenapamil, Imazalil, Isoconazol, Ketoconazol, Lombazol, Miconazol, Pefurazoat, Prochloraz, Triflumizol, Thiazolcar 1-Imidazolyl-1-(4'-chlorophenoxy)-3,3-dimethylbutan-2-on sowie deren Metallsalze und Säureaddukte;
Pyridine und Pyrimidine wie:
   Ancymidol, Buthiobat, Fenarimol, Mepanipyrin, Nuarimol, Pyroxyfur, Triamirol;
Succinat-Dehydrogenase Inhibitoren wie:
   Benodanil, Carboxim, Carboximsulfoxid, Cyclafluramid, Fenfuram, Flutanil, Furcarbanil, Furmecyclox, Mebenil, Mepronil, Methfuroxam, Metsulfovax, Nicobifen, Pyrocarbolid, Oxycarboxin, Shirlan, Seedvax;
Naphthalin-Derivate wie:
   Terbinafin, Naftifin, Butenafin, 3-Chloro-7-(2-aza-2,7,7-trimethyl-oct-3-en-5-in);
Sulfenamide wie:
   Dichlofluanid, Tolylfluanid, Folpet, Fluorfolpet; Captan, Captofol;
Benzimidazole wie:
   Carbendazim, Benomyl, Fuberidazole, Thiabendazol oder deren Salze;
Morpholinderivate wie:
   Aldimorph, Dimethomorph, Dodemorph, Falimorph, Fenpropidin, Fenpropimorph, Tridemorph, Trimorphamid und ihre arylsulfonsauren Salze, wie z.B. p-Toluolsulfonsäure und p-Dodecylphenylsulfonsäure;
Benzthiazole wie:
   2-Mercaptobenzothiazol;
Benzthiophendioxide wie:
   Benzo[b]thiophen-S,S-dioxid-carbonsäurecyclohexylamid;
Benzamide wie:
   2,6-Dichloro-N-(4-trifluoromethylbenzyl)-benzamid, Tecloftalam;
Borverbindungen wie:
   Borsäure, Borsäureester, Borax;
Formaldehyd und Formaldehydabspaltende Verbindungen wie:
   Benzylalkoholmono-(poly)-hemiformal, 1,3-Bis(hydroxymethyl)-5,5-dimethylimidazolidine-2,4-dione (DMDMH), Bisoxazolidine, n-Butanol-hemiformal, Cis 1-(3-Chlorallyl)-3,5,7-triaza-1-azoniaadamantane chlorid, 1-[1,3-Bis(hydroxymethyl-2,5-dioxoimidazolidin-4-yl]-1,3-bis(hydroxymethyl)urea, Dazomet, Dimethylolharnstoff, 4,4-Dimethyl-oxazolidine, Ethylen¬glycol-hemiformal, 7-Ethylbicyclooxazolidine, Hexa-hydro-S-triazine, Hexamethylentetramin, N-Hydroxymethyl-N'-methylthioharnstoff, Methylenbismorpholin, Natrium N-(Hydroxymethyl)glycinat, N-Methylolchloracetamid, Oxazolidine, Paraform-aldehyd, Taurolin, Tetrahydro-1,3-oxazin, N-(2-Hydroxypropyl)-amin-methanol, Tetra-methylol-acetylen-diharnstoff (TMAD);
Isothiazolinone wie:
   N-Methylisothiazolin-3-on, 5-Chlor-N-methylisothiazolin-3-on, 4,5-Dichloro-N-octyliso-thiazolin-3-on, 5-Chlor-N-octylisothiazolinon, N-Octyl-isothiazolin-3-on, 4,5-Trimethylen-isothiazolinon, 4,5-Benzisothiazolinon;
Aldehyde wie:
   Zimtaldehyd, Formaldehyd, Glutardialdehyd, ß-Bromzimtaldehyd, o-Phthaldialdehyd;
Thiocyanate wie:
   Thiocyanatomethylthiobenzothiazol, Methylenbisthiocyanat;
quartäre Ammoniumverbindungen und Guanidine wie:
   Benzalkoniumchlorid, Benzyldimethyltetradecylammoniumchlorid, Benzyldimethyldodecylammoniumchlorid, Dichlorbenzyldimethylalkylammoniumchlorid, Didecyldimethylammoniumchlorid, Dioctyldimethylammoniumchlorid, N-Hexadecyltrimethyl-ammoniumchlorid, 1-Hexadecylpyridiniumchlorid, Iminoctadine-tris(albesilat);
Phenole wie:
   Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäuremethylester, p-Hydroxybenzoesäureethylester, p-Hydroxybenzoe-säurepropylester, p-Hydroxybenzoesäurebutylester, p-Hydroxybenzoesäureoctylester ,o-Phenylphenol, m-Phenylphenol, p-Phenylphenol, 4-(2-tert.-Butyl-4-methyl-phenoxy)-phenol, 4-(2-Isopropyl-4-methyl-phenoxy)-phenol, 4-(2,4-Dimethyl-phenoxy)-phenol und deren Alkali- und Erdalkalimetallsalze;
Mikrobizide mit aktivierter Halogengruppe wie:
   Bronopol, Bronidox, 2-Brom-2-nitro-1,3-propandiol, 2-Brom-4'-hydroxy-acetophenon, 1-Brom-3-chlor-4,4,5,5-tetramethyl-2-imidazoldinone, ß-Brom-ß-nitrostyrol, Chloracetamid, Chloramin T, 1,3-Dibrom-4,4,5,5-tetrametyl-2-imidazoldinone, Dichloramin T, 3,4-Dichlor-(3H)-1,2-dithiol-3-on, 2,2-Dibrom-3-nitril-propionamid, 1,2-Dibrom-2,4-dicyanobutan, Halane, Halazone, Mucochlorsäure, Phenyl-(2-chlor-cyan-vinyl)sulfon, Phenyl-(1,2-dichlor-2-cyanvinyl)sulfon, Trichlorisocyanursäure;
Pyridine wie:
   1-Hydroxy-2-pyridinthion (und ihre Cu-, Na-, Fe-, Mn-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;
Methoxyacrylate oder Ähnliche wie:
   Azoxystrobin, Dimoxystrobin, Fluoxastrobin, Kresoxim-methyl, Metominostrobin, Orysastrobin, Picoxystrobin, Pyraclostrobin, Trifloxystrobin, 2,4-dihydro-5-methoxy-2-methyl-4-[2-[[[[1-[3-(trifluoromethyl)phenyl]ethylidene]amino]oxy]methyl]phenyl]-3H-1,2,4-triazol-3-one (CAS-Nr. 185336-79-2);
Metallseifen wie:
   Salze der Metalle Zinn, Kupfer und Zink mit höheren Fett-, Harz-, Naphthensäuren und Phosphorsäure wie z.B. Zinn-, Kupfer-, Zinknaphtenat, -octoat, 2-ethylhexanoat, -oleat, phosphat, -benzoat;
Metallsalze wie:
   Salze der Metalle Zinn, Kupfer, Zink, sowie auch Chromate und Dichromate wie z.B. Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat;
Oxide wie:
   Oxide der Metalle Zinn, Kupfer und Zink wie z.B. Tributylzinnoxid, Cu₂O, CuO, ZnO;
Oxidationsmittel wie:
   Wasserstoffperoxid, Peressigsäure, Kaliumpersulfat;
Dithiocarbamate wie:
   Cufraneb, Ferban, Kalium-N-hydroxymethyl-N'-methyl-dithiobarbamat, Na- oder K-dimethyldithiocarbamat, Macozeb, Maneb, Metam, Metiram, Thiram, Zineb, Ziram;
Nitrile wie:
   2,4,5,6-Tetrachlorisophthalodinitril, Dinatrium-cyano-dithioimidocarbamat;
Chinoline wie:
   8-Hydroxychinolin und deren Cu-Salze;
sonstige Fungizide und Bakterizide wie:
   Bethoxazin, 5-Hydroxy-2(5H)-furanon; 4,5-Benzdithiazolinon, 4,5-Trimethylendithiazolinon, N (2-p-Chlorbenzoylethyl)-hexaminiumchlorid, 2-Oxo-2-(4-hydroxy-phenyl)-acethydroximsäurechlorid, Tris-N-(cyclohexyldiazeniumdioxy)-aluminium, N-(Cyclo-hexyldiazeniumdioxy)-tributylzinn bzw. K-Salze, Bis-N-(cyclohexyldiazeniumdioxy)-kupfer, Iprovalicarb, Fenhexamid, Spiroxamin, Carpropamid, Diflumetorin, Quinoxyfen, Famoxadone, Polyoxorim, Acibenzolar-S-methyl, Furametpyr, Thifluzamide, Methalaxyl-M, Benthiavalicarb, Metrafenon, Cyflufenamid, Tiadinil, Teebaumöl, Phenoxyethanol,
   Ag, Zn oder Cu-haltige Zeolithe allein oder eingeschlossen in polymere Werkstoffe.

Ganz besonders bevorzugt sind Mischungen mit
Azaconazol, Bromuconazol, Cyproconazol, Dichlobutrazol, Diniconazol, Diuron, Hexacona-zol, Metaconazol, Penconazol, Propiconazol, Tebuconazol, Dichlofluanid, Tolylfluanid, Fluorfolpet, Methfuroxam, Carboxin, Benzo[b]thiophen-S,S-dioxid-carbon-säurecyclohexylamid, Fenpiclonil, 4-(2,2-Difluoro-1,3-benzodioxol-4-yl)-1H-pyrrol-3-carbo-nitril, Butenafin, Imazalil, N-Methylisothiazolin-3-on, 5-Chlor-N-methylisothiazolin-3-on, N-Octylisothiazolin-3-on, Dichlor-N-octylisozhiazolinon, Mercaptobenzthiazol, Thiocyanatomethylthiobenzothiazol, Thiabendazol, Benzisothiazolinon, N-(2-Hydroxy-propyl)-amino-methanol, Benzylalkohol-(hemi)-formal, N Methylolchloracetamid, N-(2-Hydroxypropyl)-amin-methanol, Glutaraldehyd, Omadine, Zn Omadine, Dimethyldicarbonat, 2-Brom-2-nitro-1,3-propandiol, Bethoxazin, o-Phthaldialdehyd, 2,2-Dibrom-3-nitril-propionamid, 1,2-Dibrom-2,4-dicyanobutan, 1,3-Bis(hydroxymethyl)-5,5-dimethylimidazolidine-2,4-dione (DMDMH), Tetramethylol-acetylen-diharnstoff (TMAD), Ethylenglycol-hemiformal, p-Hydroxybenzoesäure, Carbendazim, Chlorophen, 3-Methyl-4-chlorphenol, o-Phenylphenol.

Desweiteren werden neben den oben genannten Fungiziden und Bakteriziden auch gut wirksame Mischungen mit anderen Wirkstoffen hergestellt:
Insektizide / Akarizide / Nematizide:
   Abamectin, Acephat, Acetamiprid, Acetoprole, Acrinathrin, Alanycarb, Aldicarb, Aldoxycarb, Aldrin, Allethrin, Alpha-cypermethrin, Amidoflumet, Amitraz, Avermectin, Azadirachtin, Azinphos A, Azinphos M, Azocyclotin,
   Bacillus thuringiensis, Barthrin, 4-Bromo-2(4-chlorphenyl)-1-(ethoxymethyl)-5-(trifluoro-methyl)-1H-pyrrole-3-carbonitrile, Bendiocarb, Benfuracarb, Bensultap, Betacyfluthrin, Bifenthrin, Bioresmethrin, Bioallethrin, Bistrifluron, Bromophos A, Bromophos M, Bufencarb, Buprofezin, Butathiophos, Butocarboxin, Butoxycarboxim,
   Cadusafos, Carbaryl, Carbofuran, Carbophenothion, Carbosulfan, Cartap, Chinomethionat, Cloethocarb, Chlordane, Chlorethoxyfos, Chlorfenapyr, Chlorfenvinphos, Chlorfluazuron, Chlormephos, N-[(6-Chloro-3-pyridinyl)-methyl]-N'-cyano-N-methyl-ethanimidamid, Chlorpicrin, Chlorpyrifos A, Chlorpyrifos M, Cis-Resmethrin, Clocythrin, Clothiazoben, Cypophenothrin Clofentezin, Coumaphos, Cyanophos, Cycloprothrin, Cyfluthrin, Cyhalothrin, Cyhexatin, Cypermethrin, Cyromazin,
   Decamethrin, Deltamethrin, Demeton M, Demeton S, Demeton-S-methyl, Diafenthiuron, Dialiphos, Diazinon, 1,2-Dibenzoyl-1(1,1-dimethyl)-hydrazin, DNOC, Dichlofenthion, Dichlorvos, Dicliphos, Dicrotophos, Difethialon, Diflubenzuron, Dimethoat, 3,5-Dimethylphenylmethylcarbamat, Dimethyl-(phenyl)-silyl-methyl-3-phenoxybenzylether, Dimethyl-(4-Ethoxyphenyl)-silylmethyl-3-phenoxybenzylether, Dimethylvinphos, Dioxathion, Disulfoton,
   Eflusilanate, Emamectin, Empenthrin, Endosulfan, EPN, Esfenvalerat, Ethiofencarb, Ethion, Ethofenprox, Etrimphos, Etoxazole, Etobenzanid,
   Fenamiphos, Fenazaquin, Fenbutatinoxid, Fenfluthrin, Fenitrothion, Fenobucarb, Fenothiocarb, Fenoxycarb, Fenpropathrin, Fenpyrad, Fenpyroximat, Fensulfothion, Fenthion, Fenvalerate, Fipronil, Flonicamid, Fluacrypyrim, Fluazuron, Flucycloxuron, Flucythrinate, Flufenerim, Flufenoxuron, Flupyrazofos, Flufenzine, Flumethrin Flufenprox, Fluvalinate, Fonophos, Formethanate, Formothion, Fosmethilan Fosthiazat, Fubfenprox, Furathiocarb,
   Halofenocid, HCH (CAS RN: 58-89-9), Heptenophos, Hexaflumuron, Hexythiazox, Hydramethylnon, Hydropren,
   Imidacloprid, Imiprothrin, Indoxycarb, Iprinomectin, Iprobenfos, Isazophos, Isoamidophos, Isofenphos, Isoprocarb, Isoprothiolane, Isoxathion, Ivermectin,
   Kadedrin
   Lambda-Cyhalothrin, Lufenuron,
   Malathion, Mecarbam, Mervinphos, Mesulfenphos, Metaldehyd, Methacrifos, Methamidophos, Methidathion, Methiocarb, Methomyl, Metalcarb, Milbemectin, Monocrotophos, Moxiectin,
   Naled, NI 125, Nicotin, Nitenpyram, Noviflumuron,
   Omethoat, Oxamyl, Oxydemethon M, Oxydeprofos,
   Parathion A, Parathion M, Penfluron, Permethrin, 2-(4-Phenoxyphenoxy)-ethyl-ethyl-carbamat, Phenthoat, Phorat, Phosalon, Phosmet, Phosphamidon, Phoxim, Pirimicarb, Pirimiphos M, Pirimiphos A, Prallethrin, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyridalyl, Pyrimidifen, Pyriproxifen, Pyrithiobac-natrium
   Quinalphos,
   Resmethrin, Rotenon,
   Salithion, Sebufos, Silafluofen, Spinosad, Spirodiclofen, Spiromesifen, Sulfotep, Sulprofos,
   Tau-fluvalinat, Taroils, Tebufenozide, Tebufenpyrad, Tebupirimphos, Teflubenzuron, Tefluthrin, Temephos, Terbam, Terbufos, Tetrachlorvinphos, Tetramethrin, Tetramethacarb, Thiacloprid, Thiafenox, Thiamethoxam, Thiapronil, Thiodicarb, Thiofanox, Thiazophos, Thiocyclam, Thiomethon, Thionazin, Thuringiensin, Tralomethrin, Transfluthrin, Triarathen, Triazophos, Triazamate, Triazuron, Trichlorfon, Triflumuron, Trimethacarb,
   Vamidothion, Xylylcarb, Zetamethrin;
Molluscizide:
   Fentinacetat, Metaldehyd, Methiocarb, Niclosamid;
Herbizide und Algizide:
   Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryn, Azimsulfuron,
   Benazolin, Benfluralin, Benfuresat, Bensulfuron, Bensulfid, Bentazon, Benzofencap, Benzthiazuron, Bifenox, Bispyribac, Bispyribac-Natrium, Borax, Bromacil, Bromobutide, Bromofenoxim, Bromoxynil, Butachlor, Butamifos, Butralin, Butylat, Bialaphos, Benzoyl-prop, Bromobutide, Butroxydim,
   Carbetamid, Carfentrazone-ethyl, Carfenstrol, Chlomethoxyfen, Chloramben, Chlor-bromuron, Chlorflurenol, Chloridazon, Chlorimuron, Chlornitrofen, Chloressigsäure, Chloransulam-methyl, Cinidon-ethyl, Chlorotoluron, Chloroxuron, Chlorpropham, Chlorsulfuron, Chlorthal, Chlorthiamid, Cinmethylin, Cinofulsuron, Clefoxydim, Clethodim, Clomazone, Chlomeprop, Clopyralid, Cyanamide, Cyanazine, Cycloat, Cycloxydim, Chloroxynil, Clodinafop-propargyl, Cumyluron, Clometoxyfen, Cyhalofop, Cyhalofop-butyl, Clopyrasuluron, Cyclosulfamuron,
   Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diduron, DNOC, DSMA, 2,4-D, Daimuron, Dalapon, Dazomet, 2,4-DB, Desmedipham, Desmetryn, Dicamba, Dichlobenil, Dimethamid, Dithiopyr, Dimethametryn,
   Eglinazin, Endothal, EPTC, Esprocarb, Ethalfluralin, Ethidimuron, Ethofumesat, Ethobenzanid, Ethoxyfen, Ethametsulfuron, Ethoxysulfuron,
   Fenoxaprop, Fenoxaprop-P, Fenuron, Flamprop, Flamprop-M, Flazasulfuron, Fluazifop, Fluazifop-P, Fuenachlor, Fluchloralin, Flufenacet Flumeturon, Fluorocglycofen, Fluoronitrofen, Flupropanate, Flurenol, Fluridone, Flurochloridone, Fluroxypyr, Fomesafen, Fosamine, Fosametine, Flamprop-isopropyl, Flamprop-isopropyl-L, Flufenpyr, Flumiclorac-pentyl, Flumipropyn, Flumioxzim, Flurtamon, Flumioxzim, Flupyrsulfuron-methyl, Fluthiacet-methyl,
   Glyphosate, Glufosinate-ammonium
   Haloxyfop, Hexazinon,
   Imazamethabenz, Isoproturon, Isoxaben, Isoxapyrifop, Imazapyr, Imazaquin, Imazethapyr, Ioxynil, Isopropalin, Imazosulfuron, Imazomox, Isoxaflutole, Imazapic,
   Ketospiradox,
   Lactofen, Lenacil, Linuron,
   MCPA, MCPA-hydrazid, MCPA-thioethyl, MCPB, Mecoprop, Mecoprop-P, Mefenacet, Mefluidid, Mesosulfuron, Metam, Metamifop, Metamitron, Metazachlor, Methabenzthiazuron, Methazol, Methoroptryne, Methyldymron, Methylisothiocyanat, Metobromuron, Metoxuron, Metribuzin, Metsulfuron, Molinat, Monalid, Monolinuron, MSMA, Metolachlor, Metosulam, Metobenzuron,
   Naproanilid, Napropamid, Naptalam, Neburon, Nicosulfuron, Norflurazon, Natriumchlorat,
   Oxadiazon, Oxyfluorfen, Oxysulfuron, Orbencarb, Oryzalin, Oxadiargyl,
   Propyzamid, Prosulfocarb, Pyrazolate, Pyrazolsulfuron, Pyrazoxyfen, Pyribenzoxim, Pyributicarb, Pyridat, Paraquat, Pebulat, Pendimethalin, Pentachlorophenol, Pentoxazon, Pentanochlor, Petroleumöle, Phenmedipham, Picloram, Piperophos, Pretilachlor, Primisulfuron, Prodiamine, Profoxydim, Prometryn, Propachlor, Propanil, Propaquizafob, Propazine, Propham, Propisochlor, Pyriminobac-methyl, Pelargonsäure, Pyrithiobac, Pyraflufen-ethyl,
   Quinmerac, Quinocloamine, Quizalofop, Quizalofop-P, Quinchlorac,
   Rimsulfuron
   Sethoxydim, Sifuron, Simazine, Simetryn, Sulfosulfuron, Sulfometuron, Sulfentrazone, Sulcotrione, Sulfosate,
   Teeröle, TCA, TCA-Natrium, Tebutam, Tebuthiuron, Terbacil, Terbumeton, Terbutylazine, Terbutryn, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thdiazimin, Thiazopyr, Triflusulfuron, Vernolat.

Thdiazimin, Thiazopyr, Triflusulfuron, Vernolat.

Die Herstellung von penflufenhaltigen Polymerpartikel erfolgt bevorzugt in einer radikalischen Öl-in-Wasser Emulsionspolymerisation bei dem mindestens ein ethylenisch, ungesättigtes Monomer in Gegenwart von Penflufen oder dessen Salze und Säureadditionsverbindungen und in Gegenwart eines radikalischen Initiators polymerisiert wird.

Üblicherweise wird zur Herstellung der penflufenhaltigen Polymerpartikel zunächst eine Emulsion hergestellt. Im Allgemeinen werden zur Herstellung dieser Emulsion zunächst die Monomeren und Penflufen oder dessen Salze und Säureadditionsverbindungen, gegebenenfalls in Gegenwart weiterer Hilfsstoffe, vermischt. Die Zugabe kann dabei so erfolgen, dass in einem Schritt, die vollständige Menge der Monomeren und des Penflufens zu der wässrigen Lösung gegeben wird. Sie kann aber auch dosiert erfolgen. Im Falle der dosierten Zugabe erfolgt die Zugabe in der Regel mindestens über einen Zeitraum von 0,5 h. Bevorzugt erfolgt die Zugabe in einem Zeitraum von 0,5 bis 5 Stunden. Gegebenenfalls wird ein neutraler pH-Wert eingestellt. Die Öl-in-Wasser Emulsion aus Monomeren, Penflufen und gegebenenfalls niedermolekularen Emulgatoren, Schutzkolloiden und Costabilisatoren wird in der Regel unter Erzeugung von hohen Scherkräften in eine Emulsion mit Partikeln der gewünschten Größe umgewandelt. Um hohe Scherkräfte zu erzeugen, werden im Allgemeinen Rotor Stator Systeme wie Ultraturrax, Ultraschall, Hochdruckdispergatoren oder axial durchströmte Düsenaggregate verwendet. Üblicherweise wird dann der radikalische Initiator zugegeben. Der radkalische Iniator kann aber genauso gut der Mischung aus Monomeren und Penflufen zugesetzt worden sein, bevor die Mischung emulgiert wird. In der Regel wird die entstandene Emulsion dann erwärmt. Üblicherweise wird die erwärmte Emulsion für einen Zeitraum von 1 bis 20 Stunden, bevorzugt 8 bis 15 Stunden, nachgerührt. Die entstandene Suspension der penflufenhaltigen Polymerpartikel bedarf in der Regel keiner weiteren Aufarbeitung. Die penflufenhaltigen Polymerpartikel können aber auch isoliert und getrocknet werden und dann weiterverabeitet werden Die Isolierung der penflufenhaltigen Polymerpartikel kann z.B. durch Filtration und Verdampfen des Wassers, beispielsweise im Sprühtrockner, erfolgen. Falls innerhalb des Herstellungsverfahren der penflufenhaltigen Mikrokapseln der pH-Wert eingestellt werden muss, dann erfolgt die Einstellung des pH-Wertes üblicherweise unter Verwendung von Alkalimetallsalze von Carbonaten Hydrogencarbonaten, Phosphaten, Hydrogenphosphaten, Dihydrogenphoshaten, Citraten oder durch Verwendung Alkalimetallverbindungen schwacher organischer Säuren.

Bevorzugt erfolgt die Herstellung der penflufenhaltigen Polymerpartikel so, dass zunächst die wässrige Lösung, bevorzugt niedermolekulare Emulgatoren enthaltend, vorgelegt wird. Eine weitere Mischung, die die Monomeren und die Wirkstoffe, insbesondere Penflufen enthält, und gegebenenfalls weiterer Hilfsstoffe, und radikalische, öllösliche Initiatoren wird dann entweder dosiert oder auch im Wesentlichen in einer Menge, zu der wässrigen Lösung gegeben. Dann wird bevorzugt der radikalische öllösliche Initiator zugegeben. Bevorzugt wird danach die Emulsion unter hohen Scherkräften emulgiert, um auf die gewünschte Partikelgröße zu kommen. Die Emulsion wird vorzugsweise dann erwärmt und für einen Zeitraum von vorzugsweise 8 bis 15 Stunden nachgerührt. Bevorzugt wird die wässrige Suspension der penflufenhaltigen Polymerpartikel dann zu den erfindungsgemäßen bioziden Mischungen verarbeitet.

Die Polymerisation erfolgt im Allgemeinen bei Temparaturen zwischen 50 °C und 90 °C. Die Polymerisation kann aber auch bei höheren oder geringeren Temperaturen durchgeführt werden. Bevorzugt erfolgt die Polymerisation bei 60 °C bis 80 °C.

Im Allgemeinen werden 0,1 Gew. % bis 30 Gew.% , bevorzugt 0,2 Gew.% bis 20 Gew.% und ganz besonders bevorzugt 0,5 Gew.% bis 15 Gew.% Penflufen bezogen auf die Gesamtmenge der Monomeren im Herstellungsverfahren der penflufenhaltigen Polymerpartikel eingesetzt.

Die Molekulargewichte der penflufenhaltigen Polymerpartikel können in einem sehr breiten Bereich variieren, bevorzugt haben sie eine Molmasse von 10.000 bis 100.000 g/mol.

Die penflufenhaltigen Polymerpartikel weisen üblicherweise einen mittleren Teilchendurchmesser von kleiner 1,5 µm auf, bevorzugt von 20 nm bis 1 µm, besonders bevorzugt 50 nm bis 600 nm auf. Die Bestimmung des mittleren Teilchendurchmessers erfolgt durch Laserbeugung gemäß ISO 13320-1.

Wenn innerhalb der Patentanmeldung auf eine Ölphase Bezug genommen wird, dann ist hierbei die Phase gemeint, in der sich die im Wesentlichen wasserunlöslichen, eingesetzten Verbindungen gegenseitig gelöst haben. Die Ölphase enthält im Allgemeinen das oder die Monomeren, Penflufen, radikalischer öllöslicher Initiator, ggf. einen Costabilisator, ggf. weitere Wirkstoffe und ggf. weitere Hilfsstoffe.

Die Wasserphase enthält im Allgemeinen einen oder mehrere Emulgatoren und/oder Schutzkolloide und ggf. Salze und Radikalfänger, die verhindern sollen, dass die Polymerisation in der Wasserphase startet.

Das Verhältnis von Ölphase zu Wasserphase kann in einem großen Bereich variiert werden. Im Allgemeinen beträgt das Verhältnis 10:1 bis 1:10, bevorzugt 5:1 bis 1:5.

Die penflufenhaltigen Polymerpartikel werden dann im Allgemeinen mit den Kupferverbindungen und den Alkanolaminen zu den erfindungsgemäßen bioziden Mischungen vermischt. Es können aber ebenfalls die Kupferverbindungen zunächst mit den Alkanolaminen vermischt werden und dann zu den penflufenhaltigen Polymerpartikeln hinzugegeben werden und in dieser Weise die erfindungsgemäßen bioziden Mischungen hergestellt werden. Bevorzugt werden den Alkanolaminen oder/und den Kupferverbindungen Lösungsmittel zugesetzt. Bevorzugt wird als Lösungsmittel Wasser eingesetzt. Bevorzugt werden zunächst die Kupferverbindungen mit den Alkanolaminen und gegebenenfalls dem Lösungsmittel vermischt und dann zu den penflufenhaltigen Polymerpartikeln gegeben. Im Rahmen der Vermischung der Kupferverbindungen mit den Alkanolaminen entstehen Kupfer-Alkanolamin-Komplexe. Diese können separat hergestellt werden oder auch in situ ohne weitere Abtrennung eingesetzt werden.

Der Kupfer-Alkanolamin-Komplex enthält gewöhnlich ein wasserlösliches Alkanolamin. Geeignete Kupfer-Alkanolmin-Komplexe schließen, Ethanolamin-Kupfer-Komplexe, Diethanolamin-Kupfer-Komplexe, Triethanolamin-Kupfer-Komplexe, und jegliche Kombination irgendwelcher der vorgenannten ein.

Das molare Verhältnis der Kupferverbindungen zu Penflufen kann in einem breiten Bereich variiert werden. Im Allgemeinen wird Kupfer im Überschuss eingesetzt. Bevorzugt liegt das molare Verhältnis der Kupferverbindungen zu Penflufen in einem Bereich von 150:1 bis 2:1. Besonders bevorzugt liegt das molare Verhältnis zwischen 120:1 und 3:1 und ganz besonders bevorzugt zwischen 90:1 und 5:1.

Das molare Verhältnis von Alkanolaminen zu Penflufen kann in einem breiten Bereich variiert werden. Bevorzugt liegt das molare Verhältnis von Alkanolaminen zu Penflufen in einem Bereich von 600:1 bis 8:1. Besonders bevorzugt liegt das molare Verhältnis von Alkanolaminen zu Penflufen zwischen 480:1 und 15:1 und ganz besonders bevorzugt zwischen 360:1 und 20:1.

Das molare Verhältnis von Alkanolaminen zu Kupfer kann in einem breiten Bereich variiert werden. Bevorzugt liegt das molare Verhältnis von Alkanolaminen zu Kupfer in einem Bereich von 10:1 bis 1:1. Besonders bevorzugt liegt das molare Verhältnis von Alkanolaminen zu Kupfer zwischen 8:1 und 2:1.

Das molare Verhältnis von Kupfer zu Penflufen kann in einem breiten Bereich variiert werden. Im Allgemeinen wird Kupfer im Überschuss eingesetzt. Bevorzugt liegt das molare Verhältnis von Kupfer zu Penflufen in einem Bereich von 600:1 bis 8:1. Besonders bevorzugt liegt das molare Verhältnis von Kupfer zu Penflufen zwischen 600:1 und 20:1 und ganz besonders bevorzugt zwischen 600:1 und 40:1.

Die erfindungsgemäßen bioziden Mischungen können durch Zugabe von weiteren Hilfsmitteln, wie z.B. Lösungs- und Verdünnungsmitteln, Antioxidantien, Radikalfänger, UV-Stabilisatoren, wie UV-Absorbern und Chelatoren, Entschäumern, sowie weitere Bioziden, Verdickungsmitteln und Gebindekonservierungsmitteln zu Holzschutzmitteln umgesetzt werden oder auch direkt ohne weitere Zugabe dieser Inhaltsstoffe eingesetzt werden. Bevorzugt werden den erfindungsgemäßen biozide Mischungen, Lösungs- und Verdünnungsmitteln und gegebenenfalls dann Verdickungsmittel, Entschäumer, weitere Biozide und Gebindekonservierungsmittel zugesetzt.

Als Lösungs- und Verdünnungsmitteln kommen im Wesentlichen in Frage: Aromaten, wie Xylol, Toluol oder Alkylnaphthaline, chlorierte Aromaten oder chlorierte aliphatische Kohlenwasserstoffe, wie Chlorbenzole oder Chlorethylene, aliphatische Kohlenwasserstoffe, wie Cyclohexan oder Paraffine, z.B. Erdölfraktionen, Alkohole, wie Butanol oder Glycol sowie deren Ether und Ester, sowie Wasser.

Als Verdickungsmittel werden beispielweise Polysaccharide, Xanthan Gum, Natrium- oder Magnesium Silicate, Heteropolysaccharide, Alginate, Carboxymethylcellulose, Gummi Arabicum oder Polyacrylsäuren eingesetzt. Bevorzugt wird als Verdickungsmittel Xanthan Gum eingesetzt.

Als Gebindekonservierungsmittel werden beispielsweise und vorzugsweise Biozide, Bakterizide und Fungizide eingesetzt.

Als Entschäumer können im Allgemeinen grenzflächenaktive Stoffe eingesetzt werden, die in der tensidischen Lösung nur schwach löslich sind. Bevorzugte Entschäumer sind solche, die sich von natürlichen Fetten und Ölen, Petroleum-Derivaten oder Siliconölen ableiten.

Die erfindungsgemäßen Holzschutzmittel könnten auch eingefärbt werden. Als Farbstoffe können anorganische Pigmente, wie z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die erfindungsgemäßen Holzschutzmittel enthalten im Allgemeinen zwischen 0.05 und 20 Gewichtsprozent penflufenhaltige Polymerpartikel bezogen auf die Gesamtmenge an eingesetztem Holzschutzmittel, vorzugsweise zwischen 0.2 und 5 Gewichtsprozent. Die erfindungsgemäßen Holzschutzmittel enthalten im Allgemeinen zwischen 0.2 und 50 Molprozent Kupfer bezogen auf die Gesamtmenge an eingesetztem Holzschutzmittel, vorzugsweise zwischen 1 und 20 Molprozent.

Die erfindungsgemäßen Holzschutzmittel können weiterhin noch weitere Biozide oder Hilfsstoffe wie Wirkverstärker enthalten. Falls als Biozide Triazole eingesetzt werden, ist die Menge dieser Triazole im Allgemeinen kleiner als 3,5 Gew. % bezogen auf die Gesamtmenge an eingesetztem Holzschutzmittel. Bevorzugt liegt die Menge an eingesetzten Triazolen, falls Triazole als Biozide eingesetzt werden, zwischen 0,01 Gew. % und 3 Gew. %. Besonders bevorzugt ist die Menge der Triazole kleiner als 0,01 Gew. % bezogen auf die Gesamtmenge an eingesetztem Holzschutzmittel.

Die erfindungsgemäßen Holzschutzmittel können ebenfalls als Konzentrate bereitgestellt werden.

Zur Holzbehandlung kann das Konzentrat auf einen Konzentrationsbereich von ungefähr 0,02 bis ungefähr 50 % verdünnt werden. Gebrauchsverdünnungen der Zusammensetzung umfassen typischerweise eine biozid wirksame Menge Kupfer-Alkanolamin-Komplex und penflufenhaltige Polymerpartikel. Vorzugsweise umfassen Gebrauchsverdünnungen ungefähr 0,1 bis ungefähr 2,0 Gew.-% der oben genannten Konzentrate.

Die erfindungsgemäße biozide Mischung und/oder das Holzschutzmittel können durch bekannte Holzbehandlungsverfahren aufgebracht werden, einschließlich, aber nicht beschränkt auf, Aufbürsten, Tauchen, Tränken, Vakuumimprägnierung (z. B. Doppelvakuumtechnik) und Druckbehandlung unter Verwendung verschiedener Zyklen.

Von der Erfindung ist auch die Verwendung der bioziden Mischungen und Holzschutzmittel zum Schutz von Holz, Holzprodukten und Holz-Plastik-Komposite gegen Mikroorganismen umfasst.

Als Mikroorganismen, die einen Abbau oder eine Veränderung von Holz, Holzprodukten und Holz-Plastik-Komposite bewirken können, seien beispielsweise Bakterien, Pilze, Hefen, Algen und Schleimorganismen genannt. Vorzugsweise wirkt Penflufen gegen Pilze, insbesondere Schimmelpilze, holzverfärbende und holzzerstörende Pilze (Basidiomyceten) sowie gegen Schleimorganismen und Algen. Des Weiteren wurde gefunden, dass die erfindungsgemäßen penflufenhaltigen Mikrokapseln und Holzschutzmittel, einen hervorragenden Schutz des Holzes gegen holzzerstörendee Pilze (Basidiomyceten) aufweisen.

Es seien beispielsweise Mikroorganismen der folgenden Gattungen genannt:
Altemaria, wie Altemaria tenuis,
Aspergillus, wie Aspergillus niger,
Chaetomium, wie Chaetomium globosum,
Coniophora, wie Coniophora puetana,
Fomitopsis, wie Fomitopsis palustris
Gloeophyllum, wie Gloeophyllum trabeum,
Lentinus, wie Lentinus tigrinus,
Poria, wie Poria placenta,
Penicillium, wie Penicillium glaucum,
Polyporus, wie Polypom versicolor,
Aureobasidium, wie Aureobasidium pullulans,
Sclerophoma, wie Sclerophoma pityophila,
Stereum, wie Stereum sanguinolentum.
Trichoderma, wie Trichoderma viride,
Escherichia, wie Escherichia coli,
Pseudomonas, wie Pseudomonas aeruginosa,
Staphylococcus, wie Staphylococcus aureus.

Als holzzerstörende Basidiomyceten, die einen Abbau oder eine Veränderung von Holz und holzhaltigen Materialien bewirken können, seien beispielsweise und vorzugsweise genannt:
Coniophora, wie Coniophora puteana,
Lentinus, wie Lentinus tigrinus, Antrodia, wie Antrodia sinuosa
Polyporus, wie Polyporus versicolor,
Gloeophyllum, wie Gloeophyllum trabeum,
Fomitopsis, wie Fomitopsis palustris
Poria, wie Poria placenta,
Stereum, wie Stereum sanguinolentum.

Von der Erfindung ist daher auch die Verwendung der erfindungsgemäßen bioziden Mischungen und Holzschutzmittel zum Schutz von Holz, Holzprodukten und Holz-Plastik-Komposite gegen die Zerstörung durch holzzerstörenden Basidiomyceten umfasst.

Ganz besonders bevorzugt wirken die bioziden Mischungen und die Holzschutzmittel gegen Arten der Gattungen Gloeophyllum, Coniophora, Coriolus, Stereum oder Poria. Noch weiter bevorzugt wirken die bioziden Mischungen gegen Arten der Gattungen Coniphora oder Poria, insbesondere gegen Poria placenta und Coniphora puteana. Noch weiter bevorzugt ist die Verwendung von bioziden Mischungen und penflufenhaltigen Holzschutzmittel zum Schutz von Holz gegen Poria placenta.

Unter Holz, Holzwerkstoffe und Holzplastikverbundstoffe, welche durch die erfindungsgemäßen bioziden Mischungen und Holzschutzmitteln geschützt werden können, ist beispielhaft zu verstehen: Bauholz, Holzbalken, Eisenbahnschwellen, Brückenteile, Bootsstege, Holzfahrzeuge, Kisten, Paletten, Container, Telefonmasten, Holzverkleidungen, Holzfenster und -türen, Sperrholz, Mitteldichte Faserplatten (MDF), Spanplatten, Oriented Strand Board (OSB), Waferboard, Laminated Veneer Lumber (LVL) oder Holzprodukte, die ganz allgemein beim Hausbau oder in der Bautischlerei Verwendung finden sowie Holzplastik-Verbundstoffe. Bevorzugt ist der Schutz von Holz und Vollholz.

Die erfindungsgemäßen bioziden Mischungen und Holzschutzmittel können ausgezeichnet in das Holz bzw. das Holzprodukt eindringen und dadurch effizient wirken. Zudem zeigen sie eine verbesserte Wirkung gegen holzzerstörende Mikroorganismen im Vergleich zum unverkapseltem Penflufen, in Gegenwart von Kupferverbindungen und Alkanolaminen, auf.

### Beispiele

### Beispiel 1

### 1.1 Herstellung der Penflufenhaltigen Polymerpartikel

Eine Lösung von 2,88 g SDS (Na-Dodecylsulfat), 0,163 g Natriumhydrogencarbonat in 200g Wasser wird mit einer organischen Lösung bestehend aus 91,7 g Methylmethacrylat, 4,3 g Penflufen, 3,84 g Hexadecan und 1,63 g 2,2'-Azobis(2-methylbutyronitril) versetzt und zum Erzeugen einer Emulsion 30 min durch einen Durchlaufultraturrax (IKA T 25 digital / Aufsatz DK 25.11; 14000 U/min) behandelt. Anschließend überführt man in einen 1000 ml Dreihalskolben, wäscht mit N₂ und erhitzt unter Rühren langsam auf 70 °C. Es wird bei dieser Temperatur 15 h nachgerührt. Nach dem Abkühlen erhält man eine dünnflüssige, weißliche Suspension mit einem Gehalt an Penflufen von 1,56 % (HPLC).

Mittlere Teilchengröße (gemessen mit Laserbeugung) 0,153 µm ; 90 % der Teilchen (Vol%) sind kleiner 0,382 µm.

### 1.2 Herstellung der Penflufenlösung für den Vergleichversuch

7,5 g Penflufen werden in einer Mischung aus 232,5 g Genagen 4296 (N,N-Dimethylfettsäureamid / CAS Nr 14433-76-2) und 260 g Emulan EL (Ethoxyliertes Rhizinusöl) unter Rühren gelöst. Die Lösung enthält 1,5 Gew.% Penflufen.

### 1.3 Herstellung des Kupferethanolaminkomplexes

Durch Auflösen von 455,25 g Kupfercarbonat/-hydroxid (auch bekannt als basisches Kupfercarbonat) in 959,00 g Ethanolamin und 1085,75 g Wasser und Rühren wurde eine wässrige Lösung von Kupfer-Ethanolamin hergestellt. Der Gehalt an Kupfer ist 10 Gew.%.

### 1.4 Herstellung der in Beispiel 2 untersuchten Mischungen Penflufen plus Kupferethanolaminkomplex

Der Kupfer-ethanolaminkomplex aus Beispiel 1.3 wird in einem Erlenmeyerkolben in einer Menge vorgelegt, die zu den in Tabelle 1 eingesetzten Kupfer / Penflufengewichtsmengenverhältnissen führt. Unter stetigem Rühren, auf einem Magnetrührer, gibt man langsam die notwendige Menge Penflufenlösung aus Beispiel 1.2 bzw. die notwendige Menge Penflufenhaltiges Polymer aus Beispiel 1.1 zu und lässt 3 h nachrühren.

**Tabelle 1 (Zusammensetzung der in Beispiel 2 eingesetzten Wirkstofflösungen)**

| Wirkstoff | Nummer | Kupfer-ethanolaminkomplex (aus Beispiel 1.3) | Penflufenhaltiges Polymer (aus Beispiel 1.1) | PenflufenLösung (aus Beispiel 1.2 (Vergleichsversuch) |
|---|---|---|---|---|
| Cu+Penflufen (40:1) | JJT 6646 | 85,6 Gew.% | | 14,4 Gew.% |
| Cu+Penflufen in Polymer (40:1) | JJT 6648 | 86,5 Gew.% | 13,5 Gew.% | |
| Cu+Penflufen (100:1) | JJT 6647 | 93,7 Gew.% | | 6,3 Gew.% |
| Cu+Penflufen in Polymer (100:1 | JJT 6649 | 94,1 Gew.% | 5,9 Gew.% | |

### Beispiel 2

Die Wirksamkeit der penflufenhaltigen Polymerpartikel, in der Mischung mit Kupfer wurde gemäß der DIN EN 113 bestimmt. Als Testreferenz wurde eine Mischung aus Penflufen und Kupfer eingesetzt.

Hierzu wurden 25 x15x 4 mm große Prüfkörper der Holzart Pinus sylvestris und Fagus sylvatica, mit 0,04 bis 0,4 %-igen wässrigen Wirkstofflösungen (Kupfer und Penflufen) vakuumgetränkt und 14 Tage konditioniert. Die Menge der Wirkstoffe pro kg/m³ in den behandelten Prüfkörpern wurde gemessen und ist in den Tabellen A bis D dargestellt. Nach 14 Tagen wurden die Prüfkörper auf einem Agar-Agar Medium mit einer Pilzsporensuspension gemäß der DIN EN 113 beimpft. Nach weiteren 10 bzw. 11 Wochen Inkubation wurde der durchschnittliche Gewichtsverlust der Holz-Prüfkörper bestimmt.

**Tabelle A (Test Pilz: Coniophora puteana; Holz: Pinus sylvestris)**

| *Wirkstoffe* | *Nummer* | *Wirkstoffmenge im Holz [kg*/*m3]* | *Durchschnittlicher Gewichtsverlust Holz [%]* |
|---|---|---|---|
| Cu + Penflufen (40:1) | JJT 6646 | 0.32 | 3.7 |
| Cu + Penflufen (40:1) | JJT 6646 | 0.46 | 1.6 |
| Cu + Penflufen in polymer (40:1) | JJT 6648 | 0.32 | 0.6 |
| Cu + Penflufen in polymer (40:1) | JJT 6648 | 0.46 | 0.3 |
| Cu + Penflufen (100:1) | JJT 6647 | 0.51 | 17.5 |
| Cu + Penflufen (100:1) | JJT 6647 | 0.71 | 3.4 |
| Cu + Penflufen in polymer (100:1) | JJT 6649 | 0.51 | 2.7 |
| Cu + Penflufen in polymer (100:1) | JJT 6649 | 0.71 | 0.5 |

**Tabelle B (Test Pilz: Poria placenta; Holz: Pinus sylvestris)**

| *Wirkstoffe* | *Nummer* | *Wirkstoffmenge im Holz [kg*/*m3]* | *Durchschnittlicher Gewichtsverlust Holz [%]* |
|---|---|---|---|
| Cu + Penflufen (40:1) | JJT 6646 | 0.32 | 27 |
| Cu + Penflufen (40:1) | JJT 6646 | 0.46 | 9.5 |
| Cu + Penflufen in polymer (40:1) | JJT 6648 | 0.32 | 5.6 |
| Cu + Penflufen in polymer (40:1) | JJT 6648 | 0.46 | 1.9 |
| Cu + Penflufen (100:1) | JJT 6647 | 0.51 | 50 |
| Cu + Penflufen (100:1) | JJT 6647 | 0.71 | 41 |
| Cu + Penflufen in polymer (100:1) | JJT 6649 | 0.51 | 3.8 |
| Cu + Penflufen in polymer (100:1) | JJT 6649 | 0.71 | 0.2 |

**Table C (Test Pilz: Gloeophyllum trabeum; Holz: Pinus sylvestris)**

| *Wirkstoffe* | *Nummer* | *Wirkstoffmenge im Holz [kg*/*m3]* | *Durchschnittlicher Gewichtsverlust Holz [%]* |
|---|---|---|---|
| Cu + Penflufen (40:1) | JJT 6646 | 0.32 | 4.0 |
| Cu + Penflufen (40:1) | JJT 6646 | 0.46 | 1.2 |
| Cu + Penflufen in polymer (40:1) | JJT 6648 | 0.32 | 0.2 |
| Cu + Penflufen in polymer (40:1) | JJT 6648 | 0.46 | 0.1 |
| Cu + Penflufen (100:1) | JJT 6647 | 0.51 | 4.4 |
| Cu + Penflufen (100:1) | JJT 6647 | 0.71 | 0.6 |
| Cu + Penflufen in polymer (100:1) | JJT 6649 | 0.51 | 1.3 |
| Cu + Penflufen in polymer (100:1) | JJT 6649 | 0.71 | 0.6 |

**Tabelle D (Test Pilz: Coriolus versicolor; Holz: Fagus sylvatica (beech))**

| *Wirkstoffe* | *Nummer* | *Wirkstoffmenge im Holz [kg*/*m3]* | *Durchschnittlicher Gewichtsverlust Holz [%]* |
|---|---|---|---|
| Cu + Penflufen (40:1) | JJT 6646 | 0.32 | 3.4 |
| Cu + Penflufen (40:1) | JJT 6646 | 0.46 | 1.0 |
| Cu + Penflufen in polymer (40:1) | JJT 6648 | 0.32 | 0.2 |
| Cu + Penflufen in polymer (40:1) | JJT 6648 | 0.46 | 0.1 |
| Cu + Penflufen (100:1) | JJT 6647 | 0.51 | 6.5 |
| Cu + Penflufen (100:1) | JJT 6647 | 0.71 | 2.2 |
| Cu + Penflufen in polymer (100:1) | JJT 6649 | 0.51 | 0.3 |
| Cu + Penflufen in polymer (100:1) | JJT 6649 | 0.71 | 0.3 |

Überraschenderweise ist der durchschnittliche Gewichtsverlust an Holz für Mischungen, die Penflufen und Polymer und Kupfer als Wirkstoffe enthalten, deutlich geringer im Vergleich zu Mischungen bei denen Penflufen und Kupfer eingesetzt wurden, also bei denen nicht zumindest ein Teil des Penflufen durch das Polymer geschützt wurde.

## Patentansprüche

1. Biozide Mischung enthaltend penflufenhaltige Polymerpartikel, mindestens ein Alkanolamin ausgewählt aus der Gruppe Monoalkylmonoamine, Monoalkyldiamine, Dialkylamine und Trialkylamine, die mit einer, zwei oder drei Hydroxylgruppen substituiert sind und mindestens eine Kupferverbindung oder deren Kupfer-Alkanolaminkomplexe.

2. Biozide Mischung gemäß Anspruch 1, **dadurch gekennzeichnet, dass** die penflufenhaltigen Polymerpartikel mindestens ein Styrolpolymer, Styrolcopolymer, Acrylpolymer oder Acrylcopolymer enthalten.

3. Biozide Mischung gemäß Anspruch 1 oder 2, **dadurch gekennzeichnet, dass** die penflufenhaltigen Polymerpartikel mindestens ein Polyalkylacrylat, Polyalkylmethacrylate, oder Copolymerisate aus Alkylacrylaten und Alkylmethacrylaten enthalten.

4. Biozide Mischung gemäß mindestens einem der Ansprüche 1 bis 3, **dadurch gekennzeichnet, dass** die penflufenhaltigen Polymerpartikel durch radikalische Öl-in-Wasser Emulsionspolymerisation bei dem mindestens ein ethylenisch, ungesättigtes Monomer in Gegenwart von Penflufen oder dessen Salze und Säureadditionsverbindungen und in Gegenwart eines radikalischen Initiators polymerisiert wird.

5. Biozide Mischung gemäß Anspruch 4, **dadurch gekennzeichnet, dass** die ethylenisch, ungesättigten Monomere Styrol, Divinylbenzol, C₁-C₂₀-Alkylacrylate, und C₁-C₁₈-Alkylmethacrylate oder Gemische aus diesen Monomeren sind.

6. Biozide Mischung gemäß mindestens einem der Ansprüche 1 bis 5, **dadurch gekennzeichnet**, das als Kupferverbindungen wasserlösliche, anorganische Kupferverbindungen eingesetzt werden.

7. Biozide Mischung gemäß mindestens einem der Ansprüche 1 bis 6, **dadurch gekennzeichnet**, das als Kupferverbindungen Kupfersulfat, Kupferacetat, Kupfercarbonat, Kupferhydroxid, Kupferborat, Kupferfluorid, Kupferoxid, Kupferchlorid und Kupferhydroxidcarbonat oder Gemische dieser Verbindungen eingesetzt werden.

8. Biozide Mischung gemäß mindestens einem der Ansprüche 1 bis 7, **dadurch gekennzeichnet**, das als Alkanolamine C₁-C₈-Monoalkylmonoamine, C₁-C₈-Monoalkyldiamine und sekundäre C₁-C₈-Dialkylamine, die mit einer oder zwei Hydroxylgruppen substituiert sind, eingesetzt werden.

9. Biozide Mischung gemäß mindestens einem der Ansprüche 1 bis 8, **dadurch gekennzeichnet**, das als Alkanolamine Isopropanolamin, 1,1-, 1,2-Diaminoethanol, Aminoethylethanolamin, Diethanolamin, Triethanolamin, Methylethanolamin und Monoethanolamin oder Gemische dieser Verbindungen eingesetzt werden

10. Biozide Mischung gemäß mindestens einem der Ansprüche 1 bis 9, **dadurch gekennzeichnet, dass** die eingesetzte molare Menge von Kupfer bezogen auf die molare Menge an Penflufen in den penflufenhaltigen Polymerpartikel zwischen 800 : 1 bis 8 : 1 beträgt.

11. Biozide Mischung gemäß mindestens einem der Ansprüche 1 bis 10, **dadurch gekennzeichnet, dass** die Menge Penflufen bezogen auf die Gesamtmenge der penflufenhaltigen Polymerpartikel zwischen 0,5 Gew. % und 15 Gew. % liegt.

12. Holzschutzmittel enthaltend biozide Mischungen gemäß Ansprüchen 1 bis 11 und mindestens ein Lösungs- oder Verdünnungsmittel, sowie gegebenenfalls Verdickungsmittel, gegebenenfalls Entschäumer und gegebenenfalls Gebindekonservierungsmittel und gegebenenfalls weitere Biozide.

13. Verfahren zum Schutz von Holz, Holzprodukten oder Holz-Plastik-Verbundstoffe vor dem Befall und/oder Zerstörung durch Mikroorganismen, **dadurch gekennzeichnet, dass** man eine Mischung gemäß einem der Ansprüche 1 bis 11 auf den Mikroorganismus oder dessen Lebensraum einwirken lässt.

14. Verwendung von bioziden Mischungen und Holzschutzmitteln gemäß wenigstens einem der Ansprüche 1 bis 12 zum Schutz von Holz, Holzprodukten oder Holz-Plastik-Verbundstoffe vor Befall und/oder Zerstörung durch Mikroorganismen.

15. Holz, Holzwerkstoffe oder Holz-Plastik-Verbundstoffe enthaltend biozide Mischungen gemäß Anspruch 1 bis 11.

## Claims

1. Biocidal mixture comprising penflufen-containing polymer particles, at least one alkanolamine selected from the group consisting of monoalkylmonoamines, monoalkyldiamines, dialkylamines and trialkylamines, substituted by one, two or three hydroxyl groups, and at least one copper compound or copper-alkanolamine complexes thereof.

2. Biocidal mixture according to Claim 1, **characterized in that** the penflufen-containing polymer particles comprise at least one styrene polymer, styrene copolymer, acrylic polymer or acrylic copolymer.

3. Biocidal mixture according to Claim 1 or 2, **characterized in that** the penflufen-containing polymer particles comprise at least one polyalkyl acrylate, polyalkyl methacrylates, or copolymers of alkyl acrylates and alkyl methacrylates.

4. Biocidal mixture according to at least one of Claims 1 to 3, **characterized in that** the penflufen-containing polymer particles by radical oil-in-water emulsion polymerization wherein at least one ethylenically unsaturated monomer is polymerized in the presence of penflufen or its salts and acid addition compounds and in the presence of a radical initiator.

5. Biocidal mixture according to Claim 4, **characterized in that** the ethylenically unsaturated monomers are styrene, divinylbenzene, C₁-C₂₀ alkyl acrylates and C₁-C₁₈ alkyl methacrylates or mixtures of these monomers.

6. Biocidal mixture according to at least one of Claims 1 to 5, **characterized in that** copper compounds used comprise water-soluble inorganic copper compounds.

7. Biocidal mixture according to at least one of Claims 1 to 6, **characterized in that** copper compounds used comprise copper sulfate, copper acetate, copper carbonate, copper hydroxide, copper borate, copper fluoride, copper oxide, copper chloride and copper hydroxide carbonate or mixtures of these compounds.

8. Biocidal mixture according to at least one of Claims 1 to 7, **characterized in that** alkanolamines used comprise C₁-C₈ monoalkylmonoamines, C₁-C₈ monoalkyldiamines and secondary C₁-C₈ dialkylamines substituted by one or two hydroxyl groups.

9. Biocidal mixture according to at least one of Claims 1 to 8, **characterized in that** alkanolamines used comprise isopropanolamine, 1,1- and 1,2-diaminoethanol, aminoethylethanolamine, diethanolamine, triethanolamine, methylethanolamine and monoethanolamine or mixtures of these compounds.

10. Biocidal mixture according to at least one of Claims 1 to 9, **characterized in that** the molar amount of copper used, based on the molar amount of penflufen in the penflufen-containing polymer particles, is between 800 : 1 to 8 : 1.

11. Biocidal mixture according to at least one of Claims 1 to 10, **characterized in that** the amount of penflufen, based on the total amount of the penflufen-containing polymer particles, is between 0.5% by weight and 15% by weight.

12. Wood preservative comprising biocidal mixtures according to Claims 1 to 11 and at least one solvent or diluent, and also optionally thickeners, optionally defoamers and optionally in-container preservatives, and optionally further biocides.

13. Method of protecting wood, wood products or wood-plastic composites from infestation and/or destruction by microorganisms, **characterized in that** a mixture according to any of Claims 1 to 11 is allowed to act on the microorganism or its habitat.

14. Use of biocidal mixtures and wood preservatives according to at least one of Claims 1 to 12 for protecting wood, wood products or wood-plastic composites from infestation and/or destruction by microorganisms.

15. Wood, woodbase materials or wood-plastic composites comprising biocidal mixtures according to Claim 1 to 11.

## Revendications

1. Mélange biocide contenant des particules polymères contenant du penflufène, au moins une alcanolamine choisie dans le groupe constitué par les monoalkylmonoamines, les monoalkyldiamines, les dialkylamines et les trialkylamines, qui sont substituées avec un, deux ou trois groupes hydroxyle, et au moins un composé de cuivre ou leurs complexes cuivre-alcanolamine.

2. Mélange biocide selon la revendication 1, **caractérisé en ce que** les particules polymères contenant du penflufène contiennent au moins un polymère de styrène, un copolymère de styrène, un polymère acrylique ou un copolymère acrylique.

3. Mélange biocide selon la revendication 1 ou 2, **caractérisé en ce que** les particules polymères contenant du penflufène contiennent au moins un polyacrylate d'alkyle, des polyméthacrylates d'alkyle ou des copolymères d'acrylates d'alkyle et de méthacrylates d'alkyle.

4. Mélange biocide selon au moins l'une quelconque des revendications 1 à 3, **caractérisé en ce que** les particules polymères contenant du penflufène par une polymérisation radicalaire en émulsion huile dans eau lors de laquelle au moins un monomère éthyléniquement insaturé est polymérisé en présence de penflufène ou ses sels et de composés d'addition acide et en présence d'un initiateur radicalaire.

5. Mélange biocide selon la revendication 4, **caractérisé en ce que** les monomères éthyléniquement insaturés sont le styrène, le divinylbenzène, les acrylates d'alkyle en C₁-C₂₀ et les méthacrylates d'alkyle en C₁-C₁₈ ou les mélanges de ces monomères.

6. Mélange biocide selon au moins l'une quelconque des revendications 1 à 5, **caractérisé en ce que** des composés de cuivre inorganiques solubles dans l'eau sont utilisés en tant que composés de cuivre.

7. Mélange biocide selon au moins l'une quelconque des revendications 1 à 6, **caractérisé en ce que** du sulfate de cuivre, de l'acétate de cuivre, du carbonate de cuivre, de l'hydroxyde de cuivre, du borate de cuivre, du fluorure de cuivre, de l'oxyde de cuivre, du chlorure de cuivre et de l'hydroxyde-carbonate de cuivre ou des mélanges de ces composés sont utilisés en tant que composés de cuivre.

8. Mélange biocide selon au moins l'une quelconque des revendications 1 à 7, **caractérisé en ce que** des monoalkylmonoamines en C₁-C₈, des monoalkyldiamines en C₁-C₈ et des dialkylamine en C₁-C₈ secondaires, qui sont substituées avec un ou deux groupes hydroxyle, sont utilisées en tant qu'alcanolamines.

9. Mélange biocide selon au moins l'une quelconque des revendications 1 à 8, **caractérisé en ce que** de l'isopropanolamine, du 1,1-, 1,2-diaminoéthanol, de l'aminoéthyléthanolamine, de la diéthanolamine, de la triéthanolamine, de la méthyléthanolamine et de la monoéthanolamine ou des mélanges de ces composés sont utilisés en tant qu'alcanolamines.

10. Mélange biocide selon au moins l'une quelconque des revendications 1 à 9, **caractérisé en ce que** la quantité molaire utilisée de cuivre, par rapport à la quantité molaire de penflufène dans les particules polymères contenant du penflufène, est comprise entre 800:1 et 8:1.

11. Mélange biocide selon au moins l'une quelconque des revendications 1 à 10, **caractérisé en ce que** la quantité de penflufène par rapport à la quantité totale de particules polymères contenant du penflufène est comprise entre 0,5 % en poids et 15 % en poids.

12. Agent de protection du bois contenant des mélanges biocides selon les revendications 1 à 11 et au moins un solvant ou diluant, ainsi qu'éventuellement des épaississants, éventuellement des agents antimousse et éventuellement des agents de conservation dans l'emballage et éventuellement des biocides supplémentaires.

13. Procédé de protection de bois, de produits à base de bois ou de matériaux composites bois-plastique contre une infestation et/ou une destruction par des microorganismes, **caractérisé en ce qu'**un mélange selon l'une quelconque des revendications 1 à 11 est laissé agir sur les microorganismes ou leur habitat.

14. Utilisation de mélanges biocides et d'agents de protection du bois selon au moins l'une quelconque des revendications 1 à 12 pour la protection de bois, de produits à base de bois ou de matériaux composites bois-plastique contre une infestation et/ou une destruction par des microorganismes.

15. Bois, matériaux à base de bois ou matériaux composites bois-plastique contenant des mélanges biocides selon les revendications 1 à 11.
